# EUROPEAN PATENT APPLICATION

(11) **EP 4 822 536 A1**
(43) Date of publication of application: **14.10.2026**
(21) Application number: 24905771.2
(22) Date of filing: 14.10.2024
(51) Int. Cl.: G06F 11/07

(54) **PROCESSOR FAILURE RATE PROCESSING METHOD AND PROCESSING APPARATUS, AND ELECTRONIC DEVICE**

(30) Priority: 22.12.2023 CN 202311788375
(71) Applicant: Huawei Technologies Co., Ltd., Shenzhen, Guangdong 518129 (CN)
(72) Inventor: DI, Qianli, Shenzhen, Guangdong 518129 (CN)
(74) Representative: Gill Jennings & Every LLP
(86) International application number: PCT/CN2024/124626
(87) International publication number: WO 2025/130282

(57) **Abstract**

This application relates to the field of electronic technologies, and provides a processor failure rate processing method and processing apparatus, and an electronic device, to improve efficiency of a processor. The processor failure rate processing method includes: A first processor core sends address information to a second processor core, where the address information includes a storage address that is in a memory and that is of instructions and data used by the first processor core to execute a task, and performance of the first processor core is higher than performance of the second processor core; the second processor core obtains the instructions and the data from the memory by using the address information as prefetch information; and the second processor core executes the task based on the instructions and the data, to obtain an execution result, where the execution result is used to verify a failure rate of at least one of the first processor core or the second processor core.

## Description

This application claims priority to Chinese Patent Application No. 202311788375.4, filed with the China National Intellectual Property Administration on December 22, 2023 and entitled "PROCESSOR FAILURE RATE PROCESSING METHOD AND PROCESSING APPARATUS, AND ELECTRONIC DEVICE", which is incorporated herein by reference in its entirety.

### TECHNICAL FIELD

This application relates to the field of electronic technologies, and in particular, to a processor failure rate processing method and processing apparatus, and an electronic device.

### BACKGROUND

Artificial intelligence technologies are widely used in fields such as intelligent vehicles, robots, and aerospace. With rapid development of artificial intelligence technologies, users have increasingly high requirements on security levels and performance of processors. The processor may include a central processing unit (central processing unit, CPU). As a computing and control core of a computer system, the CPU is a final execution unit for information processing and program running. However, in a use process, a CPU failure rate may be caused due to factors such as quality defects, environment, aging, and improper use. The CPU failure rate refers to a CPU fault. Therefore, there is an urgent need for a method to resolve a problem of the CPU failure rate and improve security performance of the CPU.

### SUMMARY

This application provides a processor failure rate processing method and processing apparatus, and an electronic device, to improve efficiency of a processor.

To achieve the foregoing objectives, this application uses the following technical solutions.

According to a first aspect, a processor failure rate processing method is provided, and the method includes: A first processor core sends address information to a second processor core, where the address information includes a storage address that is in a memory and that is of instructions and data used by the first processor core to execute a task, and performance of the first processor core is higher than performance of the second processor core; the second processor core obtains the instructions and the data from the memory by using the address information as prefetch information (or referred to as speculative information); and the second processor core executes the task based on the instructions and the data, to obtain an execution result, where the execution result is used to verify a failure rate of at least one of the first processor core or the second processor core.

In the technical solution provided in this application, when the first processor core and the second processor core process a same service, the first processor core sends, to the second processor core, the storage address of the instructions and the data that are required for executing the task, and the second processor core directly uses the storage address as the prefetch information to obtain, from the memory, the instructions and the data for executing the task. The second processor core can obtain the prefetch information for executing the task without performing a prefetch operation, thereby reducing an area, costs, and power consumption of a component that is in the second processor core and that is configured to perform the prefetch operation, and reducing an area, costs, and power consumption of the second processor core. When the second processor core is integrated into a chip, an area and costs of the chip can be reduced. In addition, based on execution results of the two processor cores, the failure rate of at least one of the two processor cores can be verified, thereby improving security performance of a CPU. In addition, the address information is a storage address of the instructions and the data required for executing the task, and the address information is used as the prefetch information (or referred to as the speculative information), so that accuracy of the prefetch information (speculative information) is improved. Further, the second processor core executes the task based on the instructions and the data, so that task execution efficiency is improved, processing performance of the second processor core is improved, and overall performance of the second processor core is further improved.

In a possible implementation of the first aspect, the first processor core includes a cache queue; and that the first processor core sends the address information to the second processor core includes: The cache queue sends the address information to the second processor core. In the foregoing possible implementation, the address information is transmitted by using the cache queue, thereby improving transmission efficiency.

In a possible implementation of the first aspect, the first processor core further includes a memory access control module; and the method further includes: The memory access control module sends a plurality of storage addresses to the cache queue, where the plurality of storage addresses are storage addresses accessed by the first processor core by using the memory access control module in a process of executing the task; and the cache queue filters out a duplicate address in the plurality of storage addresses, to obtain the address information. In the foregoing possible implementation, the cache queue filters out the duplicate address in the plurality of storage addresses, thereby improving transmission efficiency of the address information. Further, when the address information is transmitted to the second processor core, a storage capacity occupied by the address information cached in the second processor core is reduced.

In a possible implementation of the first aspect, that the first processor core sends the address information to the second processor core includes: The first processor core sends the address information to the second processor core through a bus, where the bus is separately designed to transmit the address information. In the foregoing possible implementation, the address information is transmitted through the separately designed bus, thereby improving a speed of transmitting the address information.

In a possible implementation of the first aspect, the second processor core includes a cache; and before the second processor core obtains the instructions and the data from the memory by using the address information as the prefetch information, the method further includes: The second processor core writes the address information into the cache, and writes the instructions and the data that correspond to the address information into the cache. In the foregoing possible implementation, a speed at which the processor core obtains the instructions and the data from the cache is higher than a speed at which the processor core obtains the instructions and the data from the memory, so that a speed of obtaining the instructions and the data is improved, and performance of the second processor core is improved.

In a possible implementation of the first aspect, the method further includes: A verification module verifies the failure rate of at least one of the first processor core or the second processor core based on the execution result. In the foregoing possible implementation, a problem of a processor failure rate is resolved, and security performance of the processor is improved.

According to a second aspect, a processor failure rate processing apparatus is provided, where the processing apparatus includes a first processor core and a second processor core; the first processor core is configured to send address information to the second processor core, where the address information includes a storage address that is in a memory and that is of instructions and data used by the first processor core to execute a task, and performance of the first processor core is higher than performance of the second processor core; and the second processor core is configured to: obtain the instructions and the data from the memory by using the address information as prefetch information, and execute the task based on the instructions and the data, to obtain an execution result, where the execution result is used to verify a failure rate of at least one of the first processor core or the second processor core.

In a possible implementation of the second aspect, the first processor core includes a cache queue, and the cache queue is configured to send the address information to the second processor core.

In a possible implementation of the second aspect, the first processor core further includes a memory access control module; the memory access control module is configured to send a plurality of storage addresses to the cache queue, where the plurality of storage addresses are storage addresses accessed by the first processor core by using the memory access control module in a process of executing the task; and the cache queue is configured to filter out a duplicate address in the plurality of storage addresses, to obtain the address information.

In a possible implementation of the second aspect, the processing apparatus further includes a bus; and the first processor core is configured to send the address information to the second processor core through the bus.

In a possible implementation of the second aspect, the second processor core includes a cache; and the second processor core is further configured to: before obtaining the instructions and the data from the memory by using the address information as the prefetch information, write the address information into the cache.

In a possible implementation of the second aspect, the processing apparatus further includes a verification module, configured to verify the failure rate of at least one of the first processor core or the second processor core based on the execution result.

According to a third aspect, an electronic device is provided. The electronic device includes a memory and a processing apparatus. The memory is configured to store computer instructions. The processing apparatus includes a first processor core and a second processor core. The processing apparatus is configured to perform the processor failure rate processing method according to the first aspect or any one of the possible implementations of the first aspect.

According to a fourth aspect, a computer-readable storage medium is provided. The computer-readable storage medium stores computer instructions. When the computer instructions are run on a processing apparatus, the processing apparatus is enabled to perform the processor failure rate processing method according to the first aspect or any one of the possible implementations of the first aspect.

According to a fifth aspect, a computer program product including instructions is provided. When the computer program product is run on a processing apparatus, the processing apparatus is enabled to perform the processor failure rate processing method according to the first aspect or any one of the possible implementations of the first aspect.

It may be understood that the processing apparatus, the electronic device, the computer-readable storage medium, and the computer program product provided above may be configured to perform the corresponding methods provided above. Therefore, for beneficial effects that can be achieved by the processing apparatus, the electronic device, the computer-readable storage medium, and the computer program product, refer to the beneficial effects in the corresponding methods provided above. Details are not described herein again.

### BRIEF DESCRIPTION OF DRAWINGS

FIG. 1 is a diagram of a structure of a chip system;
FIG. 2 is a diagram of a structure of another chip system;
FIG. 3 is a diagram of a structure of still another chip system;
FIG. 4 is a diagram of execution efficiency of a processor core according to an embodiment of this application;
FIG. 5 is a diagram of a structure of an electronic device according to an embodiment of this application;
FIG. 6 is a diagram of a structure of a processor according to an embodiment of this application;
FIG. 7 is a flowchart of a processor failure rate processing method according to an embodiment of this application;
FIG. 8 is a flowchart of another processor failure rate processing method according to an embodiment of this application; and
FIG. 9 is a diagram of a structure of a processor failure rate processing apparatus according to an embodiment of this application.

### DESCRIPTION OF EMBODIMENTS

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural. In addition, in embodiments of this application, terms such as "first" and "second" are used for distinguishing between same objects or similar objects whose functions and purposes are basically the same. For example, a first threshold and a second threshold are merely used for distinguishing between different thresholds, and a sequence thereof is not limited. A person skilled in the art may understand that the terms such as "first" and "second" do not limit a quantity and an execution sequence.

It should be noted that, in this application, the term such as "example" or "for example" is used to give an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

Before embodiments of this application are described, related knowledge of dual-core lock-step is first described.

Artificial intelligence technologies are widely used in fields such as intelligent vehicles, robots, and aerospace. With rapid development of artificial intelligence technologies, users have increasingly high requirements on security levels and performance of processors. The processor includes a central processing unit (central processing unit, CPU). As a computing and control core of a computer system, the CPU is a final execution unit for information processing and program running. However, in a use process, a CPU failure rate may be caused due to factors such as quality defects, environment, aging, and improper use. In other words, a CPU fault is caused. Therefore, there is an urgent need for a method to resolve a problem of the CPU failure rate and improve performance of the CPU.

Currently, the problem of CPU failure rate can be resolved through dual-core lock-step (dual-core lock-step, DCLS), thereby improving CPU performance. Specifically, the DCLS is implemented by using the following three solutions.

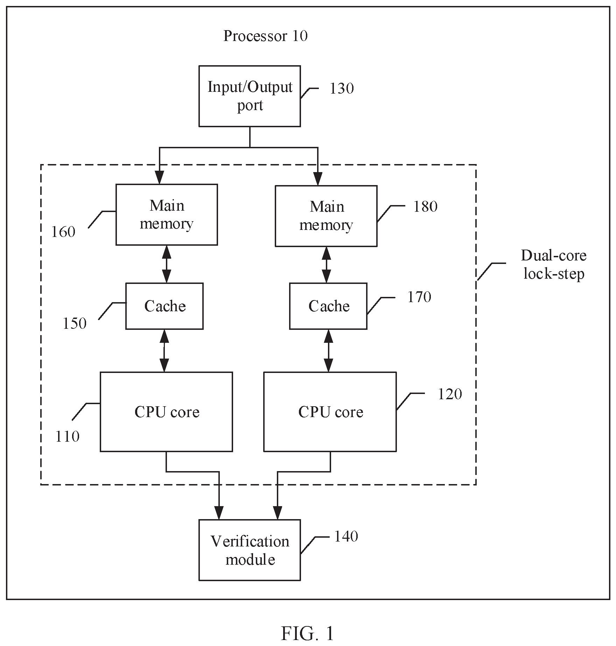

Solution 1: As shown in FIG. 1, FIG. 1 is a diagram of a structure of a processor 10. The processor 10 includes a CPU core 110, a CPU core 120, an input/output port 130, a verification module 140, a cache 150 and a main memory 160 that correspond to the CPU core 110, and a cache 170 and a main memory 180 that correspond to the CPU core 120. The input/output port 130 provides an interface between the processor 10 and a peripheral interface module. For example, the peripheral interface module may be a keyboard, a mouse, or a universal serial bus (universal serial bus, USB) device. The processor 10 may be configured to write, into the main memory, instructions and data received by the input/output port 130. For example, the instructions and the data may be written by a user in advance by using a keyboard, and the main memory may be a DDR (double data rate, double data rate) memory. Before executing a task, each CPU core separately reads, from a corresponding main memory, instructions and data that correspond to the task, and writes the read instructions and the data into a corresponding cache. The cache is, for example, an on-chip cache located in a same chip as the CPU. Each CPU core executes the task based on the instructions and data in the corresponding cache, and writes an execution result into the corresponding main memory by using a write request. The write request includes the execution result and an address, and the address is an address corresponding to storage space in the main memory that is used to store the execution result. In addition, the CPU core sends the write request to the verification module 140. The verification module 140 (for example, a parallel comparator) compares, in each clock cycle (for example, 60s), whether two execution results that are most recently written into the memory are consistent. For example, the verification module 140 compares whether the execution results are consistent based on an error correction code (error correction code, ECC) or through error detection and correction (error detection and correction, EDC). If the execution result of the CPU core 110 is inconsistent with the execution result of the CPU core 120, it indicates that a CPU core is faulty, and a fault processing module is used to perform fault processing, thereby resolving a problem of a CPU failure rate. In the example shown in FIG. 1, dual-core lock-step is implemented by the CPU core 110, the CPU core 120, the cache 150, the cache 170, the main memory 160, and the main memory 180. FIG. 1 shows only a partial structure of the processor.

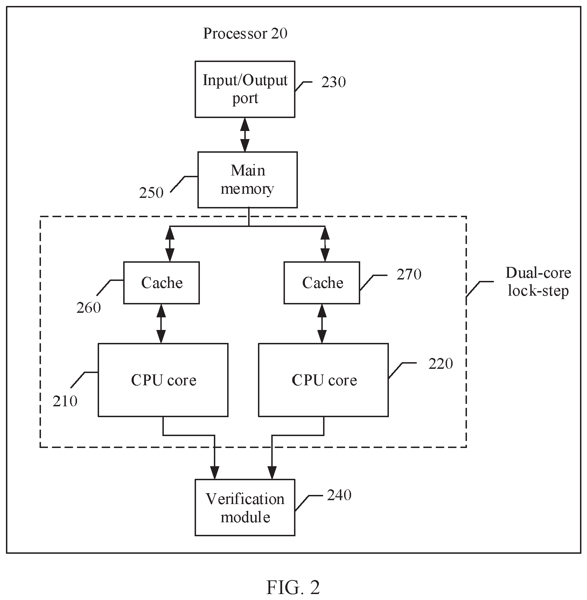

Solution 2: As shown in FIG. 2, FIG. 2 is a diagram of a structure of another processor 20. The processor 20 includes a CPU core 210, a CPU core 220, an input/output port 230, a verification module 240, a main memory 250, a cache 260 corresponding to the CPU core 210, and a cache 270 corresponding to the CPU core 220. The main memory 250 is shared by the CPU core 210 and the CPU core 220. In the example shown in FIG. 2, dual-core lock-step is implemented by the CPU core 210, the CPU core 220, the cache 260, and the cache 270. A specific process of implementing dual-core lock-step is similar to the process of implementing dual-core lock-step by the processor 10 shown in FIG. 1, and details are not described herein again.

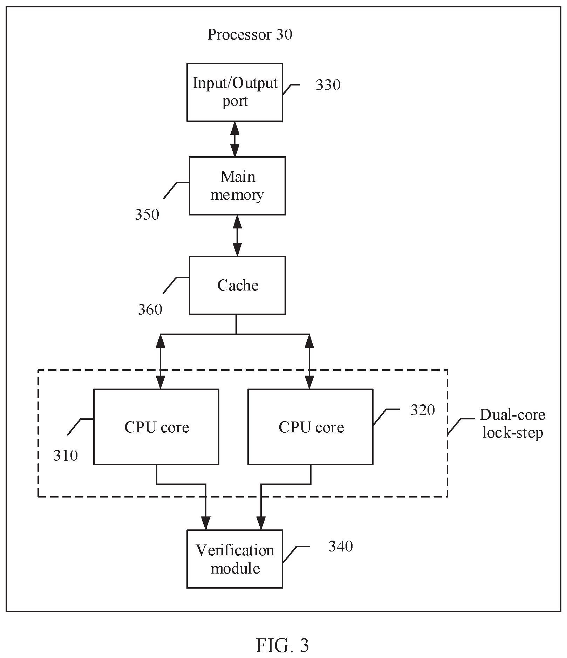

Solution 3: As shown in FIG. 3, FIG. 3 is a diagram of a structure of still another processor 30. The processor 30 includes a CPU core 310, a CPU core 320, an input/output port 330, a verification module 340, a main memory 350, and a cache 360. Both the main memory 350 and the cache 360 are shared by the CPU core 210 and the CPU core 220. In the example shown in FIG. 3, dual-core lock-step is implemented by the CPU core 310 and the CPU core 320. A specific process of implementing dual-core lock-step is similar to the process of implementing dual-core lock-step by the processor 10 shown in FIG. 1, and details are not described herein again.

Optionally, some components (such as a CPU core and a cache) of the processor shown in FIG. 1, FIG. 2, and FIG. 3 may be integrated into a chip. The processor shown in FIG. 1, FIG. 2, and FIG. 3 may include more CPU cores. For example, the processor shown in FIG. 1 may include three CPU cores. FIG. 1, FIG. 2, and FIG. 3 are merely examples, and do not constitute a limitation.

However, in the foregoing solution, to implement dual-core lock-step, at least two same CPU cores need to be disposed, and the at least two same CPU cores execute a same task. Whether a CPU core is faulty is determined based on results of executing the same task (for example, a packet transmission task, a packet modification task, an image denoising task, or a picture processing task) by different CPU cores. However, disposing dual-core lock-step (that is, disposing two same CPU cores in one chip) increases an area and costs of a chip system.

Based on this, an embodiment of this application provides a processor failure rate processing method. In the method, when a plurality of processor cores process a same service (or referred to as a homogeneous service), address information obtained by a high-performance processor core when executing a task is shared between cores, and a service of another core may be executed based on the address information (which may be used as prefetch information or speculative information), thereby improving accuracy of prefetch information and improving processing performance of the another core. A problem of verifying implementation efficiency of at least one processor core in the plurality of processor cores based on an execution result is resolved, to improve security performance of the processor, thereby improving overall performance of the processor.

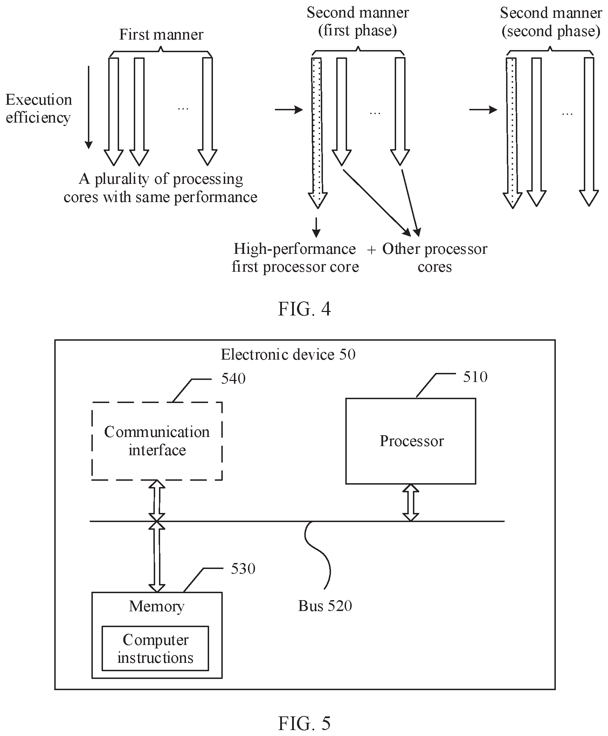

For example, as shown in FIG. 4, an arrow in FIG. 4 represents a processor core, and a length of each arrow represents execution efficiency of the processor core. In a first manner, a plurality of processor cores (for example, CPU cores shown in FIG. 1, FIG. 2, and FIG. 3) with same performance are used to execute a same task, and execution efficiency of the plurality of processor cores is the same. In a second manner, a first processor core with high performance and another processor core with performance lower than that of the first processor core are used to execute a same task. In a first phase, execution efficiency of the first processor core is higher than execution efficiency of the another processor core. In this case, the first processor core shares address information with the another core. In a second phase, after the another core executes the service based on the shared address information, finally achieved execution efficiency of the another core is close to execution efficiency of the first processor core, thereby improving processing performance of the processor.

The technical solutions provided in embodiments of this application may be applied to an electronic device including a high-security-level processor. The electronic device may be, but is not limited to, a mobile robot, a drone, a vehicle-mounted device, an aerospace device, or the like. The following describes a structure of the electronic device with reference to FIG. 5. For example, FIG. 5 is a diagram of a structure of an electronic device according to an embodiment of this application. The electronic device 50 may include a processor 510, a bus 520, a memory 530, and a communication interface 540. The processor 510, the memory 530, and the communication interface 540 are connected through the bus 520.

It should be understood that, in this embodiment, the processor 510 is a control center of the electronic device 50, and is connected to all parts of the entire device through various interfaces and the bus 520. The processor 510 runs or executes a software program and/or a software module stored in the memory 530, and invokes data stored in the memory 530, to perform various functions of the electronic device 50 and process data, thereby performing overall control on the electronic device 50. The processor 510 may be a CPU, or the processor 510 may be another general-purpose processor, a digital signal processor (digital signal processor, DSP), (applicationspecific integrated circuit, ASIC), a field programmable gate array (field programmable gate array, FPGA), or another programmable logic device, a discrete gate or a transistor logic device, a discrete hardware component, or the like. The general-purpose processor may be a microprocessor, any conventional processor, or the like. Alternatively, the processor 510 may be a graphics processing unit (graphics processing unit, GPU), a neural network processing unit (neural network processing unit, NPU), a microprocessor, an ASIC, or one or more integrated circuits configured to control program execution in the solutions of this application.

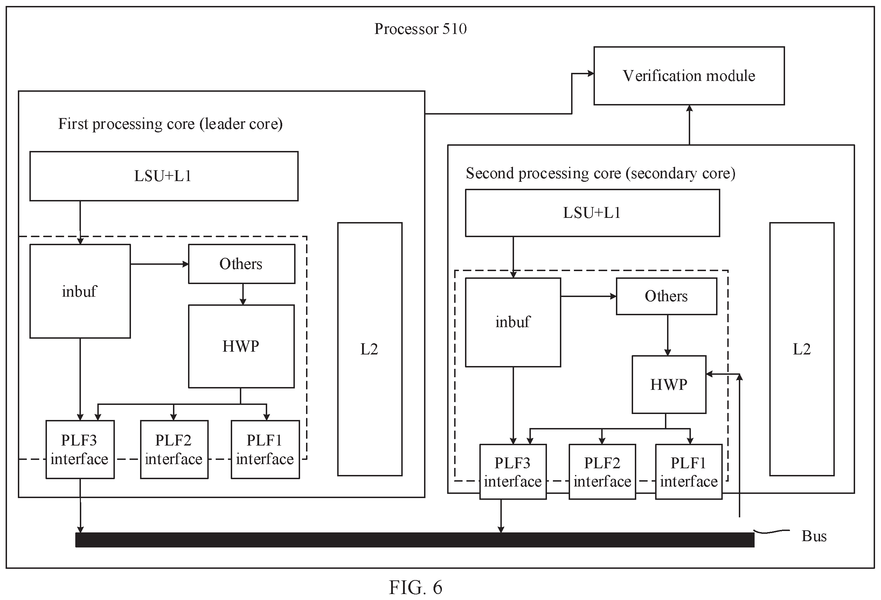

In this embodiment of this application, the processor 510 may be a multi-core processor. For example, FIG. 6 is a diagram of a structure of a processor 510 according to an embodiment of this application. As shown in FIG. 6, the processor 510 may include a plurality of processor cores (which may also be referred to as cores). For example, the processor 510 may include a first processor core and a second processor core. The first processor core includes a memory access control module and a cache queue. The memory access control module may also be referred to as a load store unit (load store unit, LSU), and the cache queue may be a prefetch input buffer (prefetch input buffer, inbuf). Further, the first processor core may further include a level 1 cache (level 1 cache, L1), a level 2 cache (level 2 cache, L2), a hardware prefetcher (hardware prefetcher, HWP), a prefetch to level 1 cache (prefetch to level 1 cache, PFL1) interface, a prefetch to level 2 cache (prefetch to level 2 cache, PFL2) interface, a prefetch to level 3 cache (prefetch to level 3 cache, PFL3) interface, and another module. In the figure, an example in which the first processor core includes an LSU, an inbuf, an L1, an L2, an HWP, a PFL1 interface, a PFL2 interface, and a PFL3 interface is used for description, and the LSU and the L1 are represented as LSU+L1. Optionally, as shown in FIG. 6, another processor core (a secondary core), for example, a second processor core, may have a structure similar to that of the first processor core. In FIG. 6, an example in which the processor 510 includes the first processor core and the second processor core is used for description, and does not constitute a limitation on a quantity of processor cores.

Optionally, the processor 510 may include a bus and a verification module. The bus may be configured to transmit address information. The bus may be a reused bus, or may be a newly added bus. The verification module may be configured to compare whether an execution result (an output result) of the first processor core is consistent with an execution result of the second processor core. For example, the verification module may be a parallel comparator. FIG. 6 shows only a partial structure of the processor 510. A person skilled in the art may understand that the structure of the processor shown in FIG. 6 does not constitute a limitation on the processor. The processor may include more or fewer components than those shown in the figure, or may include a combination of some components, or may include different component arrangements.

In a possible embodiment, the processor 510 shown in FIG. 6 may be used in an electronic device in a form of a chip. For example, the processor core and the memory included in the processor 510 may be disposed on the chip.

Still as shown in FIG. 5, the communication interface 540 is configured to implement communication between the electronic device 50 and an external device or component.

The bus 520 may include a path for transmitting information between the foregoing components (for example, the processor 510 and the memory 530). The bus 520 may include an address bus, a data bus, a control bus, and the like. However, for clear description, various types of buses are all marked as the bus 520 in the figure. The bus 520 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like.

It should be noted that, in FIG. 5, only an example in which the electronic device 50 includes one processor (for example, the processor 510) and one memory (for example, the memory 530) is used. Herein, the processor 510 and the memory 530 respectively indicate a type of component or device. In a specific embodiment, a quantity of components or devices of each type may be determined based on a service requirement.

The memory 530 may be configured to store data, a software program, and a software module. The memory 530 mainly includes a program storage area and a data storage area. The program storage area may store an operating system and an application required by at least one function, for example, a sound playing function or an image playing function. The data storage area may store data created based on use of the electronic device, for example, audio data, image data, or table data. For example, the memory 530 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

Although not shown, the electronic device may further include an audio component, a communication component, and the like. For example, the audio component includes a microphone, and the communication component includes a wireless fidelity (wireless fidelity, Wi-Fi) module, a Bluetooth module, or the like. Details are not described herein in this embodiment of this application. A person skilled in the art may understand that the structure of the electronic device shown in FIG. 5 does not constitute a limitation on the electronic device. The electronic device may include more or fewer components than those shown in the figure, or may include a combination of some components, or may include different component arrangements.

Before the processor failure rate processing method provided in this embodiment of this application is described, an application scenario of the processor failure rate processing method provided in this embodiment of this application is first described. The processor failure rate processing method provided in this embodiment of this application is applied to the processor 510 shown in FIG. 5. In a scenario with a high security level requirement, the first processor core and the second processor core in the processor 510 may be configured to simultaneously execute a same task. Because performance of the first processor core is higher/stronger than performance of the second processor core, that is, execution efficiency of the first processor core in executing a task is higher than execution efficiency of the second processor core in executing a task, the first processor core may send, to the second processor core, a storage address that is in the memory and that is of instructions and data used to execute the task. The second processor core may execute the task by using the storage address as prefetch information (or referred to as speculative information) of the task, and send, to the verification module, a request carrying an execution result. The request indicates to write the execution result into the memory 530. The verification module verifies whether an execution result of the first processor core is consistent with an execution result of the second processor core, to determine a failure rate of at least one of the first processor core and the second processor core. The fault processing module is used to perform fault processing, to resolve a problem of a processor failure rate, thereby improving security performance of the processor.

The following describes, based on the processor shown in FIG. 6, the processor failure rate processing method provided in this embodiment of this application. The processor may include a plurality of processor cores, and the multi-core processor may include a first processor core and a second processor core. The processor may include a CPU, a GPU, an NPU, or the like. This is not specifically limited in this embodiment of this application.

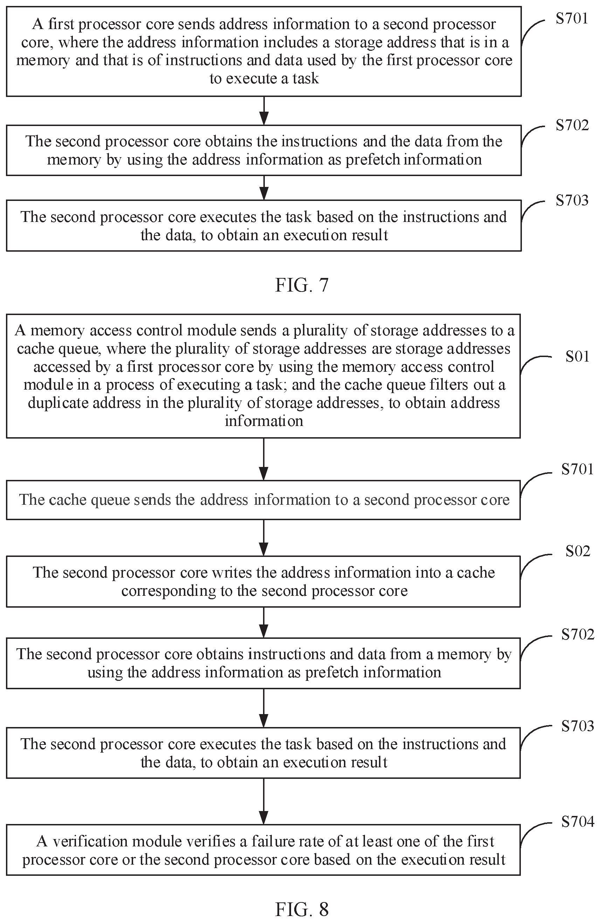

FIG. 7 is a flowchart of a processor failure rate processing method according to an embodiment of this application. The method includes the following steps.

S701: A first processor core sends address information to a second processor core, where the address information includes a storage address that is in a memory and that is of instructions and data used by the first processor core to execute a task, and performance of the first processor core is higher than performance of the second processor core.

The first processor core is a processor core with high performance in the plurality of processor cores. In other words, the first processor core is a processor core with high execution efficiency in the plurality of processor cores. The first processor core may also be referred to as a primary core or a leader core. The second processor core is any processor core, in the plurality of processor cores, whose performance is lower than that of the first processor core. In other words, the second processor core is any processor core, in the plurality of processor cores, whose execution efficiency is lower than execution efficiency of the first processor core. The second processor core may also be referred to as a secondary core or a follower core. The memory may be the memory 530 shown in FIG. 5. In actual application, the first processor core may be a large core including a large quantity of hardware resources, and the second processor core may be a small core including a small quantity of hardware resources, that is, a simplified small core.

Optionally, the first processor core, serving as the leader core, may be preset or specified. For example, the leader core is determined based on physical locations of a plurality of processor cores. For example, a 1^{st} core at a physical location is set as the leader core. Alternatively, the leader core is specified by software running on the processor. A manner of specifying the leader core is not specifically limited in this embodiment of this application.

In addition, the task is a same task executed by the first processor core and the second processor core. The same task means that data or/and instructions that need to be accessed by the two tasks in a running process are the same. For example, running instructions, data, or branches are the same. In actual application, the first processor core and the second processor core are used to simultaneously execute a same task. In other words, dual-core lock-step is implemented on the first processor core and the second processor core, to resolve a problem of a processor failure rate. The first processor core may send the address information to the second processor core after determining the address information actually used to execute the task. Specifically, the address information may be sent during execution of the task or after execution of the task is completed. This is not limited in this embodiment.

In a possible embodiment, when the first processor core receives an instruction for executing a task, the first processor core executes the task, and accesses a memory or a cache (for example, a level 1 cache or a level 2 cache) by using a memory access control module to obtain instructions and data required for executing the task, to obtain address information. Similarly, when the second processor core receives an execution instruction of a service, the second processor core executes the service. A running speed of the first processor core is greater than a running speed of the second processor core. In other words, running speed of the first processor core is faster than running progress of the second processor core. In this way, the first processor core sends the address information to the second processor core, so that speculative performance of the second processor core can be improved, thereby improving task processing performance of the second processor core.

In addition, the address information may include instruction address information and data address information. The instruction address information is a storage address that is in the memory and that is of the instructions required by the first processor core to execute the task. The instructions required by the first processor core to execute the task may include but is not limited to a front-end fetch instruction, a jump instruction (including a jump direction and a jump destination), a back-end memory access instruction, a sequential instruction, a value prediction instruction, and the like. The data address information is a storage address of the data required by the first processor core to execute the task.

In a possible embodiment, before the first processor core executes the task, a hardware prefetcher in the first processor core may be configured to write, in advance, the instructions and the data required for executing the task into a cache (for example, the L1 and the L2) corresponding to the first processor core in a unit of a cache line. The cache line includes the instructions and the data, and the storage address corresponding to the instructions and the data in the memory. The cache line is usually 512 bits. In a process in which the first processor core executes the task, the memory access control module sends an access request to the memory, where the access request includes the storage address in the memory. The access request is usually 8 bits. The memory access control module (for example, an LUS) indirectly accesses the memory through the cache. Each time the memory is accessed, cache lines in the cache need to be traversed to search for a storage address that needs to be accessed in a cache line. If the cache line has the storage address, and both the instructions and the data corresponding to the storage address are valid, the instructions and the data stored in the cache line are directly read. If the cache line has no storage address, or the cache line has the storage address but the instructions or the data corresponding to the storage address are invalid, the instructions and the data are directly read from the memory to the cache, and then the instructions and the data are read from the cache. In this process, one cache line may be accessed by the memory access control module a plurality of times. In other words, one storage address may be accessed a plurality of times.

In a possible example, after the first processor core determines a plurality of storage addresses, the memory access control module (for example, the LUS) sends the plurality of storage addresses to a cache queue (for example, an inbuf), where the plurality of storage addresses are storage addresses accessed by the first processor core by using the memory access control module in a process of executing the task. The cache queue stores and filters out a duplicate address in the plurality of storage addresses to obtain the address information, and the cache queue sends the address information to the second processor core. For example, the cache queue sends the address information through a PFL3 interface. The cache queue may be a multiple-in-one-out cache queue. In addition to being configured to filter out the duplicate address, the cache queue may be further configured to balance a bandwidth difference between input and output, to improve transmission efficiency of the address information. Therefore, as shown in FIG. 8, the method provided in this embodiment of this application further includes the following steps.

S01: The memory access control module sends a plurality of storage addresses to the cache queue, where the plurality of storage addresses are storage addresses accessed by the first processor core by using the memory access control module in a process of executing the task; and the cache queue filters out a duplicate address in the plurality of storage addresses, to obtain the address information.

Therefore, step S701 includes: The cache queue sends the address information to the second processor core.

For example, the address information may be a memory access request address that is not hit in the level 1 cache, or may be a subset, a full set, or the like of a level 1 high-speed memory access address of any rule. This is not specifically limited in this embodiment of this application.

In a possible embodiment, the second processor core receives the address information from the first processor core. Optionally, the plurality of processor cores are coupled through a bus. The bus may be an original bus in the processor (that is, the bus in the processor is reused), or may be a bus separately disposed in this application (for example, a newly added bus). This is not specifically limited in this embodiment of this application. Therefore, in the method provided in this embodiment of this application, step S701 specifically includes: The first processor core sends the address information to the second processor core through the bus. In this embodiment, the address information is transmitted through a separately disposed bus, so that transmission efficiency of the address information is improved.

Optionally, as shown in FIG. 6, a structure of the second processor core is similar to a structure of the first processor core. The second processor core may include a memory access control module and a cache queue, and the cache queue may be a prefetch input buffer inbuf. Further, the second processor core may further include other modules such as a level 1 cache L1, a level 2 cache L2, a hardware prefetcher HWP, a PFL1 interface, a PFL2 interface, and a PFL3 interface. In addition, the PFL3 interface of the second processor core is coupled to the PFL3 interface of the first processor core through a bus.

In a possible example, with reference to FIG. 6, that the second processor core receives the address information from the first processor core through the bus may be specifically that the hardware prefetcher (for example, the HWP) in the second processor core receives the address information from the first processor core through the bus.

It may be understood that the plurality of processor cores may include a plurality of secondary cores. In other words, in addition to the first processor core, the plurality of processor cores may further include another secondary core similar to the first processor core. The first processor core (that is, the leader core) may send the address information to each secondary core. In FIG. 6, an example in which the plurality of secondary cores include one secondary core is used for description.

Further, the method provided in this embodiment of this application further includes the following steps.

S02: The second processor core writes the address information into a cache corresponding to the second processor core.

S702: The second processor core obtains the instructions and the data from the memory by using the address information as prefetch information.

In a possible embodiment, the second processor core may include a cache and a hardware prefetcher (for example, an HWP). The hardware prefetcher may be configured to receive the address information, convert the received address information into a physical address corresponding to the memory, and obtain, from the memory by using the physical address as prefetch information, the instructions and the data that correspond to the task. The hardware prefetcher is further configured to write the physical address, and the obtained instructions and the data into the cache (for example, the L1) corresponding to the second processor core.

Optionally, because the address information may include the instruction address information and the data address information, correspondingly, the physical address obtained by converting the address information may also include an instruction physical address and a data physical address. The instruction physical address is a storage address of the instructions corresponding to the task, the data physical address is a storage address of the data corresponding to the task, and the instruction physical address and the data physical address may be separately stored in different caches. For example, the cache corresponding to the second processor core may include a first cache and a second cache. The first cache may be configured to store the instructions, and the second cache may be configured to store the data. The instruction physical address may be stored in the first cache. Optionally, the first cache is further configured to store the instructions corresponding to the task. The data physical address may be stored in the second cache. Optionally, the second cache may be configured to store the data corresponding to the task.

The cache may be any one of the level 1 cache (L1), the level 2 cache (L2), or the level 3 cache (L3) corresponding to the second processor core. All data or instructions stored in each level of cache are a part of a lower-level cache, and a cache closer to the second processor core is faster and smaller. For example, the level 1 cache is close to the second processor core, and the L1 cache is a cache with a smallest capacity and a fastest read/write speed in the three levels of caches. The second processor core may write the address information into the level 1 cache, the level 2 cache, or the level 3 cache. This is not specifically limited in this embodiment of this application. In the processor shown in FIG. 6, an example in which the second processor core includes the L1 and the L2 is used.

Further, the method provided in this embodiment of this application further includes the following steps.

S703: The second processor core executes the task based on the instructions and the data, to obtain an execution result, where the execution result is used to verify a failure rate of at least one of the first processor core or the second processor core.

Specifically, in a process of executing the task, the second processor core directly obtains, from the cache corresponding to the second processor core, the instructions and the data that are used to execute the task, uses the instructions and the data as the prefetch information, and executes the task based on the obtained instructions and the data to obtain the execution result. The second processor core sends the execution result to a verification module (for example, a parallel comparator).

Further, the method provided in this embodiment of this application further includes the following steps.

S704: The verification module verifies the failure rate of at least one of the first processor core or the second processor core based on the execution result.

Further, the second processor core writes the execution result into the memory based on a first write request, where the first write request includes the execution result of the second processor core and a first address, and the first address is an address corresponding to storage space that is in the memory and that is used to store the execution result of the second processor core. The second processor core simultaneously sends the first write request to the verification module. Similarly, the first processor core writes the execution result into the memory based on a second write request, where the second write request includes the execution result of the first processor core and a second address, and the second address is an address corresponding to storage space that is in the memory and that is used to store the execution result of the first processor core. The first processor core simultaneously sends the second write request to the verification module. The first address and the second address may be a same address. In other words, the first address and the second address may indicate same storage space in the memory.

The verification module compares, in each clock cycle (for example, 60s), whether two execution results that are most recently written into the memory are consistent. For example, the verification module may verify whether the execution results (including data, an address, and a control line) are consistent based on an error correction code (error correction code, ECC) or through error detection and correction (error detection and correction, EDC). If the execution results are consistent, the first processor core and the second processor core are normal. If the execution results are inconsistent, at least one of the first processor core and the second processor core is abnormal (including that the first processor core is abnormal, or the second processor core is abnormal, or both the first processor core and the second processor core are abnormal), a fault signal is sent, and a fault processing module is used to perform fault processing, thereby resolving a problem of a processor failure rate and improving security performance of the processor.

In this embodiment of this application, when the first processor core and the second processor core process a same service, the first processor core sends the address information to the second processor core, and the second processor core directly uses the address information as the prefetch information (or referred to as the speculative information) to obtain, from the memory, the instructions and the data for executing the task. The second processor core can obtain the prefetch information without performing a prefetch operation, thereby reducing area overheads of the hardware prefetcher. In addition, accuracy of the prefetch information is improved, so that processing performance of the second processor is improved. In addition, the execution result is used to verify the failure rate of at least one of the two processor cores, that is, to detect a CPU fault. This improves security performance of the processor core.

Further, in the foregoing embodiment, an example in which a running speed of the first processor core is greater than a running speed of the second processor core is used for description. Actually, this setting is not intended to limit an application scenario of this embodiment. In actual application, the plurality of processor cores may have a same capability or processing speed or different capabilities or processing speeds, and which processor core has a stronger capability is not limited, provided that running information obtained by one of the processor cores by executing a task may be shared with another processor core to perform the technical solution mentioned in this embodiment. For example, FIG. 6 is still used as an example. Functions of the leader core and the secondary core may be exchanged. The second processor core (secondary core) may send running information of the second processor to the first processor core (leader core), so that the first processor core executes a procedure similar to that in the embodiment shown in FIG. 7 to implement a similar function. For example, the second processor core may first execute at least a part of a function of the task and obtain the address information due to software scheduling, user selection, or the like. The address information may be shared with the first processor core to continue to execute the same task, so as to achieve a similar effect. It may be understood that the leader core and the secondary core mentioned in this embodiment, and a difference between the two cores is merely an applicable scenario, but is not intended to limit the technical solutions.

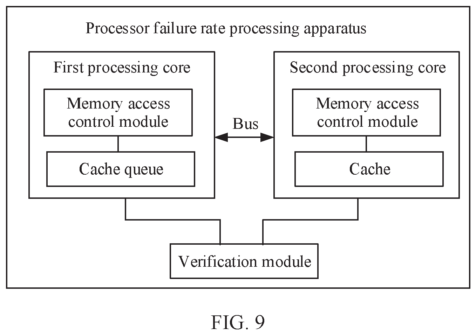

Based on this, an embodiment of this application further provides a processor failure rate processing apparatus. As shown in FIG. 9, the apparatus may be used in a processor. As shown in FIG. 9, the apparatus includes a "first processor core and a second processor core. In this embodiment of this application, the first processor core may be configured to perform steps S701 and S01 in the foregoing method embodiment, and/or other steps described in this specification, and the like. The second processor core may be configured to perform steps S02, S702, and S703 in the foregoing method embodiment, and/or other steps described in this specification, and the like.

A verification module verifies a failure rate of at least one of the first processor core or the second processor core based on an execution result.

It may be understood that, for specific structures of the first processor core and the second processor core, and all related content of the steps in the foregoing method embodiments, refer to the embodiment of the service processing apparatus. Details are not described herein again in this embodiment of this application.

In another aspect of this application, an electronic device is further provided. The electronic device includes a memory and at least one processor. The memory is configured to store computer instructions. The at least one processor includes a plurality of processor cores, and is configured to execute the computer instructions, so that the electronic device implements the processor failure rate processing method provided above. Optionally, the at least one processor includes the processor failure rate processing apparatus provided above.

It may be understood that all related content of the steps in the foregoing method embodiments may be cited in the embodiment of the processor failure rate processing apparatus and the embodiment of the electronic device. Details are not described herein again in this embodiment of this application.

In the several embodiments provided in this application, it should be understood that the disclosed apparatus and method may be implemented in another manner. For example, the described apparatus embodiment is merely an example. For example, the module or division into the units is merely logical function division and may be other division in actual implementation. For example, a plurality of units or components may be combined or integrated into another apparatus, or some features may be ignored or not performed.

The units described as separate parts may or may not be physically separate, and parts displayed as units may be one or more physical units, may be located in one place, or may be distributed across different places. Some or all of the units may be selected based on actual requirements to achieve the objectives of the solutions of embodiments.

If the integrated unit is implemented in a form of a software functional unit and is sold or used as an independent product, the integrated unit may be stored in a readable storage medium. The readable storage medium may include any medium that can store program code, for example, a USB flash drive, a removable hard disk, a read-only memory, a random access memory, a magnetic disk, or an optical disc. Based on such an understanding, the technical solutions of embodiments of this application essentially, or the part contributing to the conventional technology, or all or some of the technical solutions may be implemented in the form of a software product.

In another embodiment of this application, a readable storage medium is further provided. The readable storage medium stores computer-executable instructions, and when a device (which may be a single-chip microcomputer, a chip, or the like) or a processor performs the steps in the foregoing method embodiments.

In still another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the steps in the foregoing method embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A processor failure rate processing method, wherein the method comprises:
sending, by a first processor core, address information to a second processor core, wherein the address information comprises a storage address that is in a memory and that is of instructions and data used by the first processor core to execute a task, and performance of the first processor core is higher than performance of the second processor core;
obtaining, by the second processor core, the instructions and the data from the memory by using the address information as prefetch information; and
executing, by the second processor core, the task based on the instructions and the data, to obtain an execution result, wherein the execution result is used to verify a failure rate of at least one of the first processor core or the second processor core.

2. The method according to claim 1, wherein the first processor core comprises a cache queue; and
sending, by the first processor core, the address information to the second processor core comprises:
sending, by the cache queue, the address information to the second processor core.

3. The method according to claim 2, wherein the first processor core further comprises a memory access control module; and
the method further comprises:
sending, by the memory access control module, a plurality of storage addresses to the cache queue, wherein the plurality of storage addresses are storage addresses accessed by the first processor core by using the memory access control module in a process of executing the task; and
filtering out, by the cache queue, a duplicate address in the plurality of storage addresses, to obtain the address information.

4. The method according to any one of claims 1 to 3, wherein sending, by the first processor core, the address information to the second processor core comprises:
sending, by the first processor core, the address information to the second processor core through a bus.

5. The method according to any one of claims 1 to 4, wherein the second processor core comprises a cache; and
before obtaining, by the second processor core, the instructions and the data from the memory by using the address information as the prefetch information, the method further comprises:
writing, by the second processor core, the address information into the cache.

6. The method according to any one of claims 1 to 5, wherein the method further comprises:
verifying, by a verification module, the failure rate of at least one of the first processor core or the second processor core based on the execution result.

7. A processor failure rate processing apparatus, wherein the processing apparatus comprises a first processor core and a second processor core;
the first processor core is configured to send address information to the second processor core, wherein the address information comprises a storage address that is in a memory and that is of instructions and data used by the first processor core to execute a task, and performance of the first processor core is higher than performance of the second processor core; and
the second processor core is configured to: obtain the instructions and the data from the memory by using the address information as prefetch information, and execute the task based on the instructions and the data, to obtain an execution result, wherein the execution result is used to verify a failure rate of at least one of the first processor core or the second processor core.

8. The processing apparatus according to claim 7, wherein the first processor core comprises a cache queue; and
the cache queue is configured to send the address information to the second processor core.

9. The processing apparatus according to claim 8, wherein the first processor core further comprises a memory access control module;
the memory access control module is configured to send a plurality of storage addresses to the cache queue, wherein the plurality of storage addresses are storage addresses accessed by the first processor core by using the memory access control module in a process of executing the task; and
the cache queue is configured to filter out a duplicate address in the plurality of storage addresses, to obtain the address information.

10. The processing apparatus according to any one of claims 7 to 9, wherein the processing apparatus further comprises a bus; and
the first processor core is configured to send the address information to the second processor core through the bus.

11. The processing apparatus according to any one of claims 7 to 10, wherein the second processor core comprises a cache; and
the second processor core is further configured to: before obtaining the instructions and the data from the memory by using the address information as the prefetch information, write the address information into the cache.

12. The processing apparatus according to any one of claims 7 to 11, wherein the processing apparatus further comprises:
a verification module, configured to verify the failure rate of at least one of the first processor core or the second processor core based on the execution result.

13. An electronic device, wherein the electronic device comprises a memory and a processing apparatus, the memory is configured to store computer instructions, the processing apparatus comprises a first processor core and a second processor core, and the processing apparatus is configured to execute the computer instructions to implement the processor failure rate processing method according to any one of claims 1 to 6.

14. A computer-readable storage medium, wherein the computer-readable storage medium stores computer instructions, and when the computer instructions are run on a processing apparatus, the processing apparatus is enabled to perform the method according to any one of claims 1 to 6.

15. A computer program product comprising instructions, wherein when the computer program product is run on a processing apparatus, the processing apparatus is enabled to perform the method according to any one of claims 1 to 6.
